(19) Europäisches Patentamt
European Patent Office
Office européen des brevets

(11) **EP 1 591 063 A2**

(12) **DEMANDE DE BREVET EUROPEEN**

(43) Date de publication:
02.11.2005 Bulletin 2005/44

(51) Int Cl.⁷: **A61B 5/107**, A45D 44/02,
G01N 3/00, G06F 19/00

(21) Numéro de dépôt: **05300186.3**

(22) Date de dépôt: **16.03.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **16.03.2004  FR 0402727**

(71) Demandeur: **L'OREAL**
**75008 Paris (FR)**

(72) Inventeurs:
• **De la Mettrie, Roland**
 **78110 Le Vesinet (FR)**
• **Saint-Leger, Didier**
 **92110 Clichy (FR)**

(74) Mandataire: **Tanty, François et al**
**Nony & Associés,**
**3, rue de Penthièvre**
**75008 Paris (FR)**

(54) **Produit comportant une composition capillaire et une information renseignant sur un paramètre mesurable lié à la forme du cheveu**

(57) La présente invention concerne un produit comportant :

i) au moins une composition capillaire, et
ii) au moins une première information représentative d'au moins un paramètre mesurable lié à la forme d'au moins un cheveu d'une chevelure à laquelle la composition est adaptée et/ou d'une chevelure susceptible d'être obtenue après application de la composition.

FIG.17

## Description

La présente invention concerne la caractérisation des cheveux humains naturels ou traités, les procédés et dispositifs utilisés pour une telle caractérisation et les produits développés et/ou utilisés en fonction de cette caractérisation.

L'article « Quantitative hair form variation in seven populations » publié dans AM. J. PHYS. ANTHROP., 39: 7-18 (1973) décrit des exemples de paramètres pouvant être utilisés pour caractériser des cheveux de différentes populations en vue d'établir une relation génétique éventuelle entre elles.

L'article « A study of the size and shape of cross sections of hair from four races of men » publié dans AM. J. PHYS. ANTHROP., 19: 345-350 (1961) concerne l'étude des dimensions des cheveux en section transversale, pour différentes populations.

L'article « Preliminary study of hair form of Japanese head hairs using image analysis » publié dans la revue Forensic Science International, (2003) 131: 202-208 décrit l'acquisition d'une image d'un cheveu au moyen d'un scanner et le calcul sur l'image ainsi acquise de différents paramètres liés à la forme du cheveu. Cette caractérisation est effectuée dans le cadre d'une expertise médico-légale.

L'ouvrage « Atlas of human hair » de Robert R. Ogle, Jr. et Michelle J. Fox (1999) concerne l'identification de cheveux humains dans le cadre médico-légal. Les auteurs décrivent l'utilisation d'un gabarit de Bailey et Schliebe pour mesurer le degré de courbure d'un cheveu.

La demande de brevet européen EP 1 210 908, au nom de la demanderesse, enseigne, entre autres, l'utilisation d'un scanner pour acquérir une image d'un cheveu et l'établissement d'un diagnostic sur la base de cette image.

Il est souhaitable de pouvoir caractériser aisément un cheveu avant et/ou après un traitement capillaire, notamment un traitement autre qu'un traitement de coloration, afin par exemple de conseiller au mieux la personne concernée et, le cas échéant, quantifier l'efficacité des compositions capillaires utilisées ou susceptibles de l'être.

Il est également souhaitable de pouvoir bénéficier d'au moins un produit capillaire adapté à une forme particulière de cheveux à traiter et/ou à une forme particulière de cheveux à obtenir après traitement.

Selon l'un de ses aspects, l'invention a pour objet un produit comportant :

    i) au moins une composition capillaire, et
    ii) au moins une première information représentative d'au moins un paramètre mesurable lié à la forme d'au moins un cheveu d'une chevelure à laquelle la composition est adaptée et/ou d'une chevelure susceptible d'être obtenue après application de la composition.

Le terme « produit » ne doit pas être compris avec un sens limitatif et englobe non seulement une composition et le récipient qui la contient, mais également un kit comportant un emballage contenant le récipient précité et/ou autre chose.

Par « paramètre mesurable », on désigne une grandeur pouvant résulter d'au moins une mesure effectuée sur le cheveu, cette mesure pouvant être éventuellement très approximative.

La composition capillaire est par exemple une composition de permanente, lissage et/ou défrisage des cheveux, ou une composition de mise en forme de la chevelure, par exemple un gel de coiffage. La composition peut encore être un shampoing. La composition capillaire peut exercer une action sur la forme du cheveu mais également, le cas échéant, sur sa couleur et/ou sa brillance. Cette action peut être plus ou moins durable et/ou plus ou moins réversible.

La première information précitée peut être représentative d'au moins deux paramètres, dont l'un est au moins mesurable, liés chacun à la forme du cheveu.

Ce ou ces paramètres mesurables sont par exemple choisis parmi :

    a) le degré de courbure d'au moins un cheveu,
    b) le degré de vrillage d'au moins un cheveu,
    c) le degré de bouclage d'au moins un cheveu,
    d) le degré d'ellipticité d'au moins un cheveu, et
    e) l'épaisseur moyenne d'au moins un cheveu.

Le terme « degré » ne doit pas être compris avec un sens limitatif. Chaque paramètre mesurable peut par exemple prendre plus de deux valeurs, se voir associer plus de deux intervalles de valeurs ou passer par au moins une valeur intermédiaire entre deux valeurs extrêmes.

Le produit peut encore comporter au moins une deuxième information représentative d'au moins un paramètre observable lié à la forme d'au moins un cheveu.

Par « paramètre observable », on désigne un paramètre pouvant résulter d'au moins une observation du cheveu, sans qu'il y ait à effectuer une mesure. Un paramètre observable peut par exemple correspondre à un état rencontré ou non sur le cheveu.

Le paramètre observable peut par exemple être choisi parmi :

    a) le caractère bouclé ou non,
    b) le caractère ondulé ou non.

Un cheveu peut être considéré comme présentant un caractère bouclé lorsqu'une fois mis à plat, il forme au moins une demi révolution.

Un cheveu peut être considéré comme présentant un caractère ondulant lorsqu'une fois mis à plat, la courbure change au moins une fois de sens.

Le produit peut encore comporter au moins une troisième information associée à la composition et représentative d'au moins un paramètre non lié à la forme du cheveu. Ce paramètre non lié à la forme du cheveu est par exemple représentatif de la couleur et/ou de la brillance du cheveu avant ou après traitement.

L'information peut par exemple renseigner sur l'une au moins des coordonnées de la couleur de la chevelure à traiter ou recherchée dans un espace colorimétrique tel que par exemple l'espace CIE Lab ou celui de Munsell ou sur une hauteur de ton dans une échelle de hauteurs de tons.

Les première, deuxième et troisième informations peuvent être exprimées sous diverses formes, directement appréhendables ou non par un individu.

L'une au moins des première, deuxième et troisième informations peut par exemple comporter un identifiant.

Cet identifiant peut par exemple comporter au moins l'un d'un caractère alphanumérique, d'un symbole, d'un dessin, d'une couleur, d'un code à barres ou tout autre descripteur.

Dans un exemple de mise en oeuvre de l'invention, l'identifiant comporte au moins un caractère alphanumérique dont la forme est représentative de celle du cheveu avant ou après traitement. Ce caractère alphanumérique est par exemple choisi parmi les lettres I, O, S et C.

L'identifiant peut comporter éventuellement un chiffre, par exemple affecté comme indice, au caractère alphanumérique, ce chiffre étant choisi par exemple parmi les chiffres arabes, notamment 1 et 2 ou les chiffres romains, notamment I et II.

Dans un exemple de mise en oeuvre de l'invention, le produit comporte au moins un moyen d'analyse utile, notamment pour mesurer au moins un paramètre lié à la forme du cheveu.

Ce moyen d'analyse est par exemple inclus ou non dans un emballage avec la composition capillaire. Le moyen d'analyse et la composition capillaire peuvent ainsi être disposés dans des emballages distincts, par exemple.

Le moyen d'analyse comporte par exemple l'un au moins d'un gabarit, atlas, règle, dispositif de grossissement optique, support capable de maintenir un cheveu pour l'observation, dispositif électro-optique, dispositif d'éclairage, notamment unidirectionnel, monochromatique ou non, polarisé ou non, support informatique, moyens de fixation adhésifs d'un cheveu. Le support informatique peut par exemple contenir un programme permettant d'évaluer au moins un paramètre du cheveu, par analyse d'image par exemple.

Le produit peut encore comporter au moins une instruction renseignant sur une démarche à effectuer en vue de mesurer au moins un paramètre lié à la forme du cheveu.

Le produit peut encore comporter au moins un support permettant de fixer dessus des cheveux prélevés à différents stades d'un traitement au moyen du produit, afin de permettre à l'utilisateur de constater l'effet du traitement.

Le produit peut encore comporter au moins un conditionnement pour recevoir un cheveu avant et/ou après traitement par le produit, en vue de son expédition à un centre d'analyse délocalisé. Le conditionnement peut être pré-affranchi, le cas échéant.

Le produit peut encore comporter au moins deux représentations de cheveux et/ou de chevelures et, en correspondance avec ces représentations, au moins deux informations représentatives d'au moins un paramètre lié à la forme du cheveu, mieux sur au moins deux paramètres liés à la forme du cheveu. Ces représentations peuvent par exemple figurer sur un emballage ou récipient contenant la composition capillaire ou sur une notice. Ces représentations peuvent permettre par exemple au consommateur de déterminer plus facilement son type de cheveu avant l'achat. Elles peuvent illustrer en variante un effet exercé par la composition capillaire sur la forme du cheveu.

L'invention a encore pour objet un tableau de correspondance permettant d'établir un lien entre des marques et/ou références commerciales de compositions capillaires et au moins une information renseignant sur un paramètre mesurable lié à la forme du cheveu ou sur au moins deux paramètres liés à la forme du cheveu.

Le produit peut encore comporter une adresse électronique d'un site ou un numéro de téléphone d'un serveur où peut être envoyée une image d'au moins un cheveu, en vue de son analyse par exemple.

Le produit peut comporter une composition destinée à traiter, notamment nettoyer, le cheveu avant une mesure et/ou une observation d'au moins un paramètre lié à sa forme. Cette composition contient par exemple un tensio-actif, afin de débarrasser le cheveu de traces de compositions capillaires précédemment utilisées ou d'impuretés. Cette composition peut aussi se présenter sous la forme d'une lingette imprégnée.

L'invention a encore pour objet, selon un autre de ses aspects, une gamme de produits comportant au moins des premier et second produits tels que définis ci-dessus, le premier produit comportant une première information différente de la première information du second produit.

L'invention a encore pour objet, indépendamment ou en combinaison avec ce qui précède, un produit comportant :

i) au moins une composition capillaire,
ii) au moins une information renseignant sur au moins deux paramètres liés à la forme d'au moins un cheveu, notamment un cheveu d'une chevelure à laquelle la composition est adaptée et/ou d'une chevelure susceptible d'être obtenue après application de la composition.

L'un des deux paramètres peut être un paramètre mesurable, par exemple.

L'invention a encore pour objet, indépendamment ou en combinaison avec ce qui précède, un produit comportant :

    i) au moins une composition capillaire,
    ii) au moins un caractère alphanumérique ou un graphisme ayant une forme représentative de celle d'un cheveu d'une chevelure pour laquelle la composition est adaptée et/ou d'un cheveu d'une chevelure susceptible d'être obtenue après l'application de la composition.

Le caractère alphanumérique est par exemple choisi parmi les lettres I, O, S et C. L'identifiant peut comporter en outre, le cas échéant, un chiffre associé au caractère alphanumérique. Ce chiffre est par exemple choisi parmi les chiffres arabes, notamment 1 et 2, ou romains, notamment I et II.

L'invention a encore pour objet, indépendamment ou en combinaison avec ce qui précède, un produit comportant :

    i) au moins une composition capillaire,
    ii) au moins un moyen d'analyse pour mesurer au moins un paramètre mesurable lié à la forme d'un cheveu.

Le moyen d'analyse peut comporter l'un au moins d'un gabarit, atlas, règle, dispositif de grossissement optique, support capable de maintenir un cheveu pour l'observation, dispositif électro-optique, dispositif d'éclairage, monochromatique ou non, polarisé ou non, notamment unidirectionnel, support informatique, moyens de fixation adhésifs d'un cheveu.

L'invention a encore pour objet, indépendamment ou en combinaison avec ce qui précède, un produit comportant :

    i) au moins une composition capillaire,
    ii) au moins deux représentations de cheveux et/ou de chevelures et, en correspondance avec chaque représentation, au moins une information représentative d'au moins un paramètre lié à la forme du cheveu.

L'invention a encore pour objet, indépendamment ou en combinaison avec ce qui précède, un produit comportant :

    i) au moins une composition capillaire,
    ii) au moins un conditionnement pour recevoir un cheveu avant ou après traitement avec la composition. Ce conditionnement peut être pré-affranchi.

L'invention a encore pour objet, indépendamment ou en combinaison avec ce qui précède, un produit comportant :

    i) au moins une composition capillaire,
    ii) au moins une instruction renseignant sur une démarche à effectuer en vue de déterminer au moins un paramètre lié à la forme du cheveu. Il peut s'agir d'un paramètre mesurable ou observable.

L'invention a encore pour objet, indépendamment ou en combinaison avec ce qui précède, un système informatique agencé pour

-   recevoir d'un sujet au moins une image électronique d'au moins un cheveu,
-   analyser l'image de manière à déterminer au moins un paramètre lié à la forme du cheveu, mieux au moins deux paramètres dont l'un au moins est un paramètre mesurable,
-   délivrer au sujet au moins une information représentative dudit paramètre.

Cette information peut l'orienter sur le choix d'une composition capillaire adaptée à la chevelure dont provient le cheveu apparaissant sur l'image électronique ou à un résultat à obtenir.

Le système peut en outre être agencé pour prescrire au moins une composition capillaire adaptée à la chevelure dont est issu le cheveu.

Le système peut encore être agencé pour initier l'envoi au sujet de la composition capillaire, notamment *via* une centrale de distribution.

L'invention a encore pour objet, indépendamment ou en combinaison avec ce qui précède, un atlas comportant :

-   au moins deux représentations et/ou échantillons de chevelures,
-   au moins une première information associée à chaque représentation et/ou échantillon, représentative d'au moins un paramètre lié à la forme du cheveu, notamment au moins un paramètre mesurable, par exemple au moins un paramètre mesurable et un paramètre observable.

Le paramètre mesurable est par exemple choisi parmi :

    a) le degré de courbure d'au moins un cheveu,
    b) le degré de vrillage d'au moins un cheveu,
    c) le degré de bouclage d'au moins un cheveu,
    d) le degré d'ellipticité d'au moins un cheveu, et
    e) l'épaisseur moyenne d'au moins un cheveu.

La première information peut comporter un identifiant. Ce dernier peut comporter au moins l'un d'un caractère alphanumérique, d'un symbole, d'un dessin, d'une couleur ou d'un code à barres. L'identifiant peut notamment comporter au moins un caractère alphanumérique dont la forme est représentative de celle du cheveu avant ou après traitement.

L'atlas peut être au moins partiellement imprimé ou en variante au moins partiellement affiché ou projeté sur un écran.

L'atlas peut être utilisé par exemple pour caractériser un cheveu, en comparant ce cheveu aux différentes représentations et/ou aux différents échantillons de l'atlas.

L'atlas peut par exemple être utilisé dans le cadre de la formation professionnelle, des coiffeurs par exemple ou être utilisé pour effectuer une cartographie des types de cheveux dans le monde.

L'invention a encore pour objet, indépendamment ou en combinaison avec ce qui précède, un atlas comportant :

- au moins deux représentations 2D d'un cheveu,
- au moins une première information associée à chaque représentation et représentative d'au moins un paramètre mesurable lié à la forme du cheveu.

Par « représentation 2D », il faut comprendre une représentation en deux dimensions du cheveu autre qu'une coupe transversale du cheveu. Il peut s'agir d'une représentation du cheveu tel qu'il apparaît lorsque plaqué contre un support plan ou libre et photographié par une seule caméra.

L'invention a encore pour objet, indépendamment ou en combinaison avec ce qui précède, un procédé pour caractériser une chevelure dans le cadre du conseil à un consommateur et/ou de l'étude des effets d'une composition capillaire et/ou de la promotion d'une composition capillaire et/ou de la formation de professionnels tels que des coiffeurs ou des esthéticiennes, dans lequel on détermine au moins un paramètre mesurable lié à la forme d'un cheveu et/ou au moins deux paramètres liés à la forme du cheveu.

Cette détermination fait intervenir par exemple au moins une mesure choisie parmi : la mesure de la longueur du cheveu au repos et à l'état étiré, la mesure de la courbure du cheveu, de son épaisseur moyenne, de son ellipticité ou de la fréquence spatiale d'une variation donnée d'aspect du cheveu, notamment d'épaisseur apparente et/ou de courbure locale.

Le procédé de caractérisation de la chevelure peut être mis en oeuvre manuellement ou de manière automatisée ou semi-automatisée.

Le résultat de la caractérisation peut être délivré sous une forme écrite ou orale.

Le procédé de caractérisation peut éventuellement être suivi par la délivrance d'un conseil. Ce dernier peut par exemple comporter la prescription d'au moins une composition capillaire ayant une action sur le paramètre mesurable concerné. Il peut s'agir d'une composition de traitement des cheveux autre qu'un traitement de coloration, par exemple d'une composition de permanente, de lissage et/ou de défrisage des cheveux.

La ou les mesures effectuées peuvent avantageusement l'être à l'oeil nu, sans dispositif optique grossissant, ce qui facilite la mise en oeuvre du procédé. En variante, un dispositif optique grossissant peut être utilisé.

Le paramètre mesurable est par exemple choisi parmi :

a) le degré de courbure d'au moins un cheveu,
b) le degré de vrillage d'au moins un cheveu,
c) le degré de bouclage d'au moins un cheveu,
d) le degré d'ellipticité d'au moins un cheveu, et
e) l'épaisseur moyenne d'au moins un cheveu.

Les paramètres ci-dessus peuvent être déterminés à partir d'un même cheveu ou de cheveux différents, par exemple trois cheveux, prélevés sur une même chevelure. Le cas échéant, les résultats des mesures effectuées sur un nombre plus grand de cheveux peuvent subir un traitement statistique, afm de moyenner des valeurs mesurées, par exemple.

Le degré de courbure est par exemple déterminé à partir de la mesure du diamètre de courbure d'au moins une portion du cheveu.

La mesure du diamètre de courbure peut se faire par exemple en utilisant un gabarit ou par analyse d'image.

Le degré de vrillage peut être déterminé par exemple en comptabilisant le nombre de vrilles par unité de longueur du cheveu. Pour déterminer ce nombre de vrilles, le cheveu est avantageusement observé à l'état sensiblement étiré, sous un éclairage rasant.

Le degré de bouclage peut être déterminé par exemple à partir de la mesure de la longueur maximale ($L_2$) du cheveu et de sa longueur ($L_1$) au repos. On peut déterminer un indice de bouclage comme étant le rapport $L_2/L_1$.

L'épaisseur moyenne et/ou le degré d'ellipticité peuvent être déterminés par exemple par la mesure de dimensions du cheveu en section transversale, sous examen microscopique ou avec une loupe binoculaire.

Le procédé de caractérisation peut comporter le prélèvement d'au moins un cheveu, la détermination d'un diamètre de courbure d'au moins une portion de celui-ci, la mesure de sa longueur au repos, la mesure de sa longueur à l'état sensiblement étiré, et son observation de préférence sous éclairage rasant à l'état sensiblement étiré afin de déterminer le nombre de vrilles par unité de longueur.

Le procédé peut comporter en outre la détermination du caractère ondulant ou non du cheveu et du caractère bouclé ou non du cheveu.

On peut attribuer au cheveu un identifiant choisi parmi six identifiants, par exemple un premier identifiant « cheveux raides » correspondant à des cheveux dont le rayon de courbure au repos est supérieur ou égal à une première valeur de seuil prédéfinie, par exemple 80 cm, un second identifiant « cheveux courbés » correspondant à des cheveux ayant une légère courbure, notamment un diamètre de courbure inférieur à la première valeur de seuil, les cheveux ne présentant pas de caractère ondulant ni de caractère bouclé, un troisième identifiant « cheveux légèrement ondulés » correspondant à des cheveux dont le diamètre de courbure est par exemple supérieur ou égal à une deuxième valeur prédéfinie de seuil, par exemple 5 cm, et présentant un caractère ondulant, un quatrième identifiant « cheveux fortement ondulés » correspondant à des cheveux présentant un caractère ondulant et un diamètre de courbure inférieur à la deuxième valeur de seuil, un cinquième identifiant « cheveux légèrement bouclés » correspondant à des cheveux présentant un caractère bouclé et un diamètre de courbure supérieur ou égal à la deuxième valeur de seuil, et un sixième identifiant « cheveux fortement bouclés » correspondant à des cheveux présentant un caractère bouclé et un diamètre de courbure inférieur à la deuxième valeur de seuil.

Le résultat de la caractérisation peut être répertorié dans une base de données avec au moins une information concernant la personne sur laquelle le cheveu a été prélevé.

L'invention a encore pour objet, indépendamment ou en combinaison avec ce qui précède, un procédé de mise en évidence de l'efficacité d'une composition capillaire, comportant les étapes consistant à :

    i) attribuer à une chevelure au moins un paramètre mesurable lié à la forme du cheveu,
    ii) effectuer un traitement avec la composition,
    iii) renouveler l'étape i) sur la chevelure traitée en ii).

La comparaison des paramètres en i) et iii) peut renseigner sur l'action de la composition sur la forme du cheveu.

L'invention a encore pour objet, indépendamment ou en combinaison avec ce qui précède, un procédé de prescription d'une composition capillaire, comportant les étapes consistant à :

    i) permettre l'acquisition d'au moins une information représentative d'au moins un paramètre mesurable lié à la forme d'au moins un cheveu d'une chevelure à traiter,
    ii) en fonction de l'information obtenue en i), déterminer une composition à utiliser.

Ce procédé de prescription peut être mis en oeuvre par exemple sur un point de vente ou à distance au moyen d'un réseau informatique, notamment un réseau Internet, intranet ou de téléphonie mobile.

Le cas échéant, après l'étape ii), un produit adapté à l'obtention d'un résultat recherché est remis ou envoyé à l'utilisateur.

La fourniture du produit peut s'effectuer par tout canal de vente, notamment par la vente dans un magasin ou par correspondance, ou par le biais d'un institut de beauté ou d'un salon de coiffure, par exemple.

L'invention a encore pour objet, indépendamment ou en combinaison avec ce qui précède, un dispositif pour caractériser le degré de vrillage d'au moins un cheveu, comportant :

-   un support permettant de maintenir le cheveu dans un état sensiblement étiré,
-   une source de lumière, monochromatique ou non, polarisée ou non, permettant d'illuminer le cheveu dans une direction sensiblement perpendiculaire à une direction d'observation du cheveu.

Le cheveu peut notamment être éclairé dans une direction sensiblement parallèle au support.

Le cheveu est par exemple maintenu à l'état sensiblement étiré contre le support au moyen de bandes adhésives.

Le dispositif peut comporter une fente, orientée de préférence sensiblement parallèlement au cheveu, à travers laquelle la source émet.

L'invention a encore pour objet, indépendamment ou en combinaison avec ce qui précède, un procédé pour caractériser le degré de vrillage d'au moins un cheveu, comportant :

-   l'illumination d'un cheveu maintenu à l'état sensiblement étiré sur toute sa longueur,
-   la détermination d'une grandeur représentative d'une variation d'aspect du cheveu sur sa longueur, par exemple une fréquence spatiale de variation d'aspect du cheveu, notamment d'épaisseur apparente et/ou de brillance.

L'invention a encore pour objet, un procédé de traitement capillaire, comportant les étapes suivantes :

-   associer à un consommateur un identifiant représentatif d'au moins un paramètre mesurable lié à la forme d'au moins l'un de ses cheveux,
-   en fonction de cette information, sélectionner au moins un produit capillaire parmi un ensemble de produits repérés par des identifiants correspondants,
-   traiter le consommateur avec le ou les produits sélectionnés.

L'invention a encore pour objet un procédé de caractérisation d'au moins un cheveu dans lequel on détermine au moins le degré de vrillage du cheveu.

L'invention a encore pour objet un dispositif pour déterminer un paramètre représentatif d'un degré de bouclage d'au moins un cheveu.

Ce dispositif peut par exemple comporter un corps comportant une échelle graduée et un organe de fixation du cheveu sur ce corps, l'échelle graduée permettant de mesurer la longueur du cheveu $L_2$ à l'état sensiblement tendu et la longueur $L_1$ du cheveu au repos.

Le cas échéant, le dispositif peut comporter un moyen de calcul, manuel ou électronique, par exemple un micro-ordinateur, une calculatrice, une abaque, une règle ou un tableau, permettant de délivrer en fonction des valeurs $L_2$ et $L_1$ une information représentative du degré de bouclage. Le dispositif peut notamment être agencé pour calculer automatiquement le rapport $L_2/L_1$ et fournir l'indice correspondant.

L'invention a encore pour objet un procédé pour promouvoir la vente d'une composition capillaire, notamment une composition de permanente, défrisage et/ou lissage des cheveux, dans lequel il est fait état d'une information représentative d'au moins un paramètre mesurable lié à la forme du cheveu ou sur au moins deux paramètres liés à la forme du cheveu.

Cette information peut par exemple renseigner sur l'efficacité de la composition, notamment en termes de variation d'un paramètre mesurable, ou sur une caractéristique au moins d'une chevelure pour laquelle elle est adaptée ou sur un résultat pouvant être obtenu.

Cette promotion peut se faire par n'importe quel canal de communication. Elle pourra être faite notamment par un vendeur, directement sur un point de vente, par la radio, la télévision ou le téléphone, notamment dans le cadre de spots publicitaires ou de messages courts. Elle pourra être faite également par le canal de la presse écrite ou par le biais de tout autre document, en particulier à des fins publicitaires. Elle pourra se faire également par Internet, par tout autre réseau informatique adéquat ou par un réseau de téléphonie mobile. Elle pourra être faite également directement sur le produit, notamment sur son packaging ou sur toute notice explicative qui lui est associée.

L'invention a encore pour objet, indépendamment ou en combinaison avec ce qui précède, un dispositif pour caractériser le degré de courbure d'au moins un cheveu comportant un support d'informations tel qu'un gabarit, le support ayant au moins une zone transparente et comportant une pluralité d'arcs de cercle et/ou cercles ayant des diamètres différents, notamment imprimés, dans la zone transparente du support.

Le support est par exemple une feuille transparente.

L'invention a encore pour objet, selon un autre de ses aspects, un procédé pour caractériser le degré de courbure d'au moins un cheveu à l'aide du dispositif défini ci-dessus, le procédé comportant les étapes suivants :

- poser le support sur le cheveu de manière à ce que le cheveu apparaisse à travers la zone transparente du support,
- comparer la courbure du cheveu avec les arcs de cercle et/ou cercles du support en vue de déterminer un degré de courbure du cheveu.

L'invention pourra être mieux comprise à la lecture de la description détaillée qui va suivre, d'exemples de mise en oeuvre non limitatifs de celle-ci, et à l'examen du dessin annexé, sur lequel :

- la figure 1 représente de manière schématique un gabarit pouvant être utilisé pour déterminer le degré de courbure d'un cheveu,
- la figure 2 représente de manière schématique, en perspective, un dispositif permettant de déterminer le degré de vrillage d'un cheveu,
- la figure 3 illustre l'utilisation du dispositif de la figure 2,
- la figure 4 représente de manière schématique, en élévation, un dispositif permettant de déterminer le degré de bouclage d'un cheveu,
- la figure 5 illustre l'analyse d'une image d'un cheveu,
- la figure 6 illustre la détermination du degré d'ellipticité,
- les figures 7 à 9 représentent des exemples d'atlas réalisés conformément à l'invention,
- la figure 10 représente un exemple d'identifiant,
- la figure 11 représente un exemple de produit comportant une composition capillaire et une notice d'instructions,
- la figure 12 représente un exemple de produit comportant une composition capillaire et des moyens d'analyse du cheveu,
- la figure 13 représente un exemple de produit comportant une composition capillaire et un atlas associé,
- la figure 14 représente un exemple de produit comportant une composition capillaire et un conditionnement permettant d'adresser au moins un cheveu prélevé à un centre d'analyse,
- la figure 15 représente un exemple de tableau de correspondances entre des produits et identifiants,
- la figure 16 représente un exemple de table de résultats en fonction d'un traitement appliqué,
- la figure 17 illustre une gamme de produits associés à différents identifiants,
- la figure 18 illustre un système informatique pouvant être utilisé pour envoyer une image d'un cheveu à un centre d'analyse et/ou recevoir un conseil,
- la figure 19 représente de manière schématique un support pouvant être utilisé pour comparer des cheveux à différents stades d'un traitement, et
- la figure 20 représente de manière schématique un gabarit transparent conforme à l'invention.

Degré de courbure du cheveu

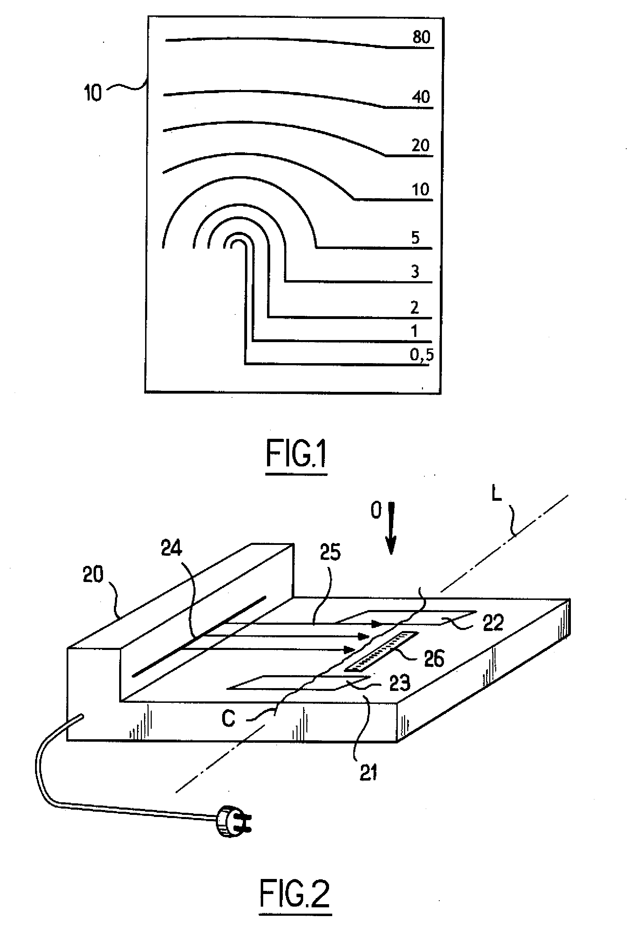

Pour caractériser le degré de courbure du cheveu, on peut utiliser tout support d'informations, par exemple un gabarit 10 dit de Bailey et Schliebe tel que celui représenté schématiquement à la figure 1, comportant des arcs de cercle de différents diamètres, par exemple égaux à 0,5, 1, 2, 3, 5, 10, 20, 40 et 80 cm respectivement.

Le gabarit 10 ou tout autre support d'informations ayant même rôle peut être un document imprimé ou être affiché ou projeté sur un écran. Les arcs de cercle peuvent encore être réalisés en relief ou sous la forme d'ajours.

Pour mesurer le degré de courbure d'un cheveu prélevé, on peut par exemple fixer l'extrémité du cheveu côté racine à l'aide d'une bande adhésive ou d'un Post-it® sur une feuille de papier puis l'aplatir éventuellement, par exemple en posant dessus un objet transparent. La couleur de la feuille sera avantageusement choisie en fonction de la couleur du cheveu afin de maximiser le contraste visuel. On pourra par exemple utiliser une feuille blanche pour des cheveux foncés et une feuille noire pour des cheveux blonds ou blancs.

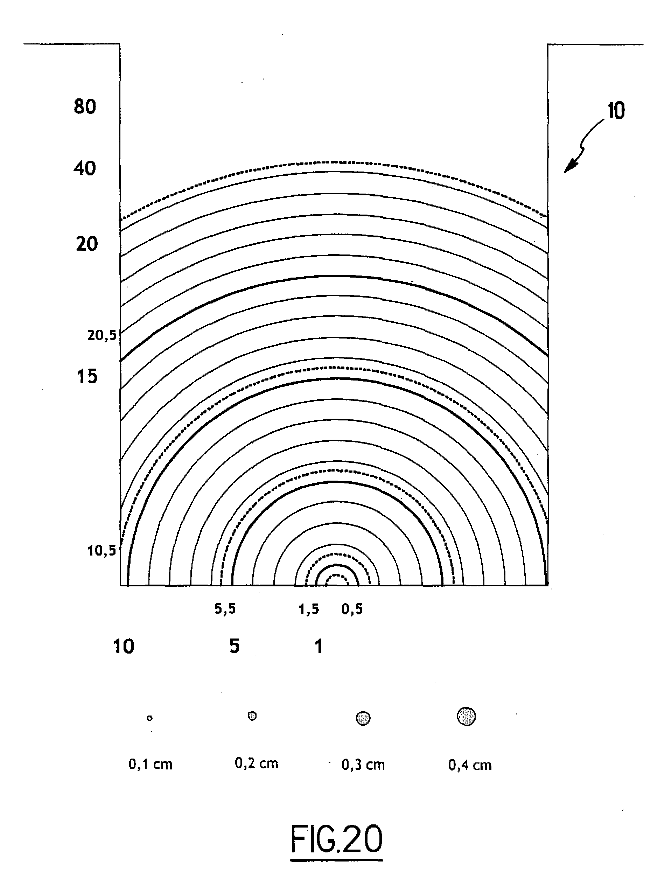

Le gabarit 10 peut par exemple être une feuille transparente sur laquelle sont imprimés des arcs de cercle et/ou cercles de diamètres différents, comme illustré à la figure 20.

Pour mesurer le degré de courbure d'un cheveu à l'aide du gabarit 10 transparent, on pose le gabarit 10 sur le cheveu de manière à l'aplatir et on compare la courbure du cheveu avec les arcs de cercle et/ou cercles.

La longueur $L_1$ au repos du cheveu peut, le cas échéant, être mesurée au moment où l'on détermine son degré de courbure. Dans le cas d'une grande hétérogénéité de diamètres, on retiendra de préférence le diamètre le plus élevé.

De préférence, on cherchera à caractériser une portion du cheveu qui est récente, par exemple celle s'étendant à partir de la racine, sur une longueur comprise entre 5 et 10 cm par exemple. Cette longueur peut être choisie égale à 5 cm par exemple.

Le degré de courbure peut encore être mesuré par analyse d'une image, par exemple une image d'un cheveu obtenue au moyen d'une photocopieuse, d'un scanner, d'une caméra ou d'un appareil photo numérique. Il est en effet aisé de calculer la courbure en tout point d'une ligne courbe s'étendant dans un plan.

Caractère ondulant

On peut déterminer également le caractère ondulant ou non du cheveu, tel que défini plus haut, à partir de son observation.

Caractère bouclé

Il s'agit d'un autre paramètre observable, défini précédemment, que l'on peut déterminer.

Exemples d'identifiants renseignant sur le degré de courbure et les caractères ondulant ou non et bouclé ou non

En fonction du diamètre mesuré et du caractère ondulant ou non et bouclé ou non du cheveu, on peut attribuer à celui-ci différents identifiants qui peuvent par exemple caractériser de manière générale un type de cheveu.

On peut par exemple attribuer :

- un premier identifiant à des cheveux dont le diamètre de courbure au repos est supérieur ou égal à 80 cm,
- un deuxième identifiant à des cheveux ayant une courbure correspondant à un diamètre de courbure inférieur à 80 cm mais ne présentant pas de caractère ondulant, ni de caractère bouclé,
- un troisième identifiant à des cheveux dont le diamètre de courbure est supérieur ou égal à 5 cm et présentant un caractère ondulant,
- un quatrième identifiant à des cheveux dont le diamètre de courbure est inférieur à 5 cm et présentant un caractère ondulant,
- un cinquième identifiant à des cheveux dont le diamètre de courbure est supérieur ou égal à 5 cm, présentant un caractère bouclé,
- un sixième identifiant à des cheveux dont le diamètre de courbure est inférieur à 5 cm et présentant un caractère bouclé.

Les premier à sixième identifiants peuvent être par exemple des lettres, chiffres ou combinaisons des deux ou encore des symboles ou autres descripteurs, par exemple sous la forme de mots, de phrases, dessins, logos, directement appréhendables par un individu ou en variante être sous une forme non directement appréhendable par un individu, tel que par exemple un code à barres ou des données mémorisées dans un fichier ou une mémoire électronique.

Dans un exemple de mise en oeuvre de l'invention, les premier à sixième identifiants comportent par exemple les chiffres romains I à VI, respectivement.

Les premier à sixième identifiants peuvent encore comporter par exemple les descripteurs respectifs "cheveux raides", "cheveux courbés", "cheveux légèrement ondulés", "cheveux fortement ondulés", "cheveux légèrement bouclés" et "cheveux fortement bouclés".

Les premier à sixième identifiants peuvent comporter encore au moins une lettre dont la forme évoque celle du cheveu.

Cette lettre peut être suivie, le cas échéant, d'un chiffre en indice par exemple afin de renseigner sur le caractère plus ou moins prononcé d'une caractéristique du cheveu.

Par exemple, le premier identifiant peut être I, le deuxième identifiant C, le troisième identifiant $S_1$, le quatrième identifiant $S_2$, le cinquième identifiant $O_1$ et le sixième identifiant $O_2$.

Degré de vrillage

Il s'agit d'un autre paramètre mesurable au sens de l'invention, qui peut permettre le cas échéant de caractériser plus précisément encore un cheveu et

Pour déterminer le degré de vrillage, on peut par exemple comptabiliser les variations d'aspect du cheveu par unité de longueur lorsque le cheveu est à l'état sensiblement étiré, notamment son épaisseur apparente et/ou sa brillance.

Pour faciliter l'observation de ces variations d'aspect, on peut avantageusement utiliser un dispositif tel que celui référencé 20 représenté schématiquement à la figure 2, comportant un support 21 devant lequel un cheveu C peut être placé, en étant maintenu à l'état sensiblement étiré par des organes de fixation 22 et 23, constitués par exemple par des bandes adhésives fixées sur le support 21.

De préférence, pour améliorer la précision, on travaille sur une longueur de cheveu C étiré d'au moins 5 cm, et de préférence on s'intéresse aux 5 à 10 premiers centimètres à partir de la racine.

Le dispositif 20 comporte une source lumineuse non apparente, agencée de manière à illuminer sous un éclairage rasant le cheveu, de préférence sur toute sa longueur.

La source émet par exemple à travers une fente 24 orientée parallèlement au plan du support 21. Le faisceau lumineux 25 émis s'étend dans une direction sensiblement parallèle au plan du support 21 et sensiblement perpendiculaire à l'axe longitudinal L du cheveu.

Lorsque la source lumineuse est artificielle, celle-ci peut comporter par exemple une lampe à incandescence ou à fluorescence, ou encore une succession de diodes électroluminescentes.

Le dispositif 20 peut comporter une échelle graduée 26 s'étendant le long du cheveu C.

L'observation du cheveu C sous éclairage rasant, dans une direction d'observation O sensiblement perpendiculaire au plan du support 21, permet de détecter des variations sensiblement périodiques de l'aspect du cheveu, notamment des strictions.

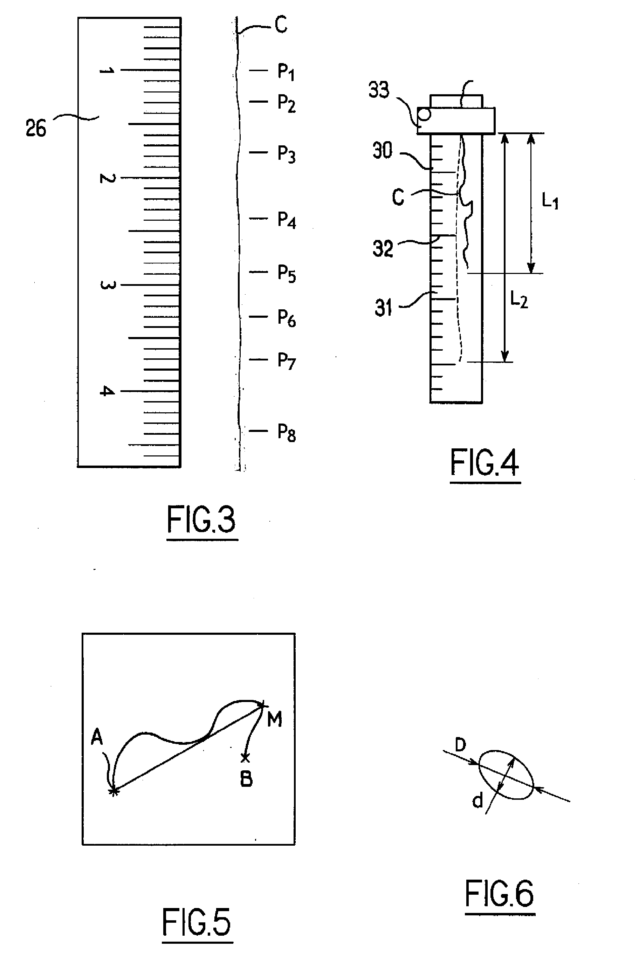

Dans l'exemple considéré à la figure 3, on peut distinguer huit strictions P1 à P8 s'étendant entre des portions d'apparence plus épaisse.

On peut déterminer le degré de vrillage du cheveu en calculant par exemple le nombre de strictions par unité de longueur.

Dans l'exemple de la figure 3, on peut ainsi compter huit strictions sur une distance de 3,4 cm environ, mesurée entre les strictions extrêmes P1 et P8, ce qui correspond à une intensité de vrille de 8/3,4 = 2,35.

Bien entendu, l'invention n'est pas limitée à un dispositif particulier permettant de déterminer le degré de vrillage et l'on peut par exemple maintenir le cheveu C à l'état étiré sur ou au-dessus du support 21 par d'autres moyens que des bandes adhésives, par exemple au moyen de poids, d'aimants, de pinces ou encore manuellement.

La couleur du support 21 pourra être choisie, le cas échéant, en fonction de celle du cheveu, de façon à faciliter l'observation.

On peut utiliser comme source lumineuse l'éclairage naturel ou artificiel.

Lorsque l'éclairage naturel est utilisé, on peut par exemple placer sur le côté du cheveu un écran agencé de manière à ce que celui-ci reçoive la lumière essentiellement de façon rasante.

Le cas échéant, le dispositif utilisé peut être agencé pour permettre l'acquisition d'une image du cheveu à l'état étiré, par exemple au moyen d'un scanner, d'une photocopieuse, d'un appareil photo numérique ou d'une caméra, une telle image pouvant éventuellement être envoyée par un réseau informatique à un serveur chargé du traitement de l'image pour déterminer le degré de vrillage. On peut ainsi déterminer le degré de vrillage du cheveu à partir de l'analyse d'une image de celui-ci.

Ce dernier peut encore être déterminé en calculant la fréquence spatiale d'une variation d'aspect du cheveu autre qu'une variation de l'épaisseur apparente, par exemple une variation de la courbure locale ou de sa brillance.

La tension exercée sur le cheveu pourra être ajustée afm de faciliter l'observation de variations répétées d'aspect du cheveu sur sa longueur.

Dans le cas de cheveux courts ou très courts, on pourra déterminer un degré de vrillage s'il existe en mesurant par exemple la distance séparant deux variations sensiblement identiques de l'aspect du cheveu, par exemple deux strictions.

On peut attribuer au cheveu un identifiant pouvant être qualifié par exemple de "sous-type", exprimant le degré de vrillage, par exemple une lettre représentative d'une gamme de valeurs de degré de vrillage.

On peut par exemple attribuer l'identifiant *a* lorsque le degré de vrillage est nul ou inférieur à 0,1, l'identifiant *b* lorsque le degré de vrillage est faible, soit supérieur à 0,1 mais inférieur ou égal à 1, l'identifiant *c* lorsque le degré de vrillage est fort, compris entre 1 et 2, et l'identifiant *d* lorsque le degré de vrillage est très fort, c'est-à-dire supérieur à 2.

Bien entendu, d'autres façons d'identifier le degré de vrillage peuvent être adoptées sans que l'on sorte du cadre de la présente invention.

On peut par exemple mesurer une longueur moyenne de vrille, cette longueur étant défmie comme étant la longueur d'une portion d'épaisseur apparente plus grande comprise entre deux strictions.

Le degré de vrillage peut alors être défini à partir de la longueur moyenne de vrille.

Degré de bouclage

Pour déterminer le degré de bouclage, on peut utiliser par exemple un dispositif tel que celui référencé 30, représenté à la figure 4.

Ce dispositif 30 comporte un corps allongé 31, muni d'une échelle graduée 32 le long de laquelle un cheveu peut s'étendre.

Celui-ci peut être fixé sur le corps 31 à une extrémité au moyen d'un organe de fixation 33 venant par exemple pincer le cheveu.

Le dispositif 30 permet de mesurer la longueur $L_1$ du cheveu au repos et sa longueur $L_2$ à l'état sensiblement tendu, le cheveu étant immobile relativement au corps 31 au niveau de l'organe de fixation 33.

L'indice de bouclage *i* peut être déterminé par le rapport $L_2/L_1$.

Le degré de bouclage peut encore être calculé aisément à partir d'une image du cheveu telle que celle de la figure 5 par exemple.

La longueur $L_1$ au repos correspond à la distance entre A et M, M étant le point du cheveu le plus éloigné de A lorsque M se déplace de A à B, A et B étant les deux extrémités du cheveu. $L_1 = \max d(A, M)$ pour M se déplaçant de A à B. On a par ailleurs

$$L_2 = \int_A^B dl$$

### Degré d'ellipticité ou épaisseur moyenne

Pour déterminer le degré d'ellipticité, on peut par exemple évaluer le rapport D/d, où D et d sont les grand et petit diamètres du cheveu, comme illustré à la figure 6.

L'épaisseur moyenne est donnée par (D+d)/2.

Les grands et petits diamètres peuvent par exemple être mesurés à l'aide d'un microscope ou d'une loupe binoculaire.

### Combinaison d'identifiants

Les différents identifiants ci-dessus peuvent être combinés, par exemple comme illustré à la figure 10, afin de former une information renseignant par exemple sur le type, le sous-type et l'indice de bouclage ou sur le type et l'indice de bouclage.

### Autres paramètres non liés à la forme du cheveu

On ne sort pas du cadre de la présente invention lorsque d'autres paramètres que ceux liés à la forme du cheveu sont déterminés, tels que par exemple sa couleur, comme évoqué plus haut.

### Atlas

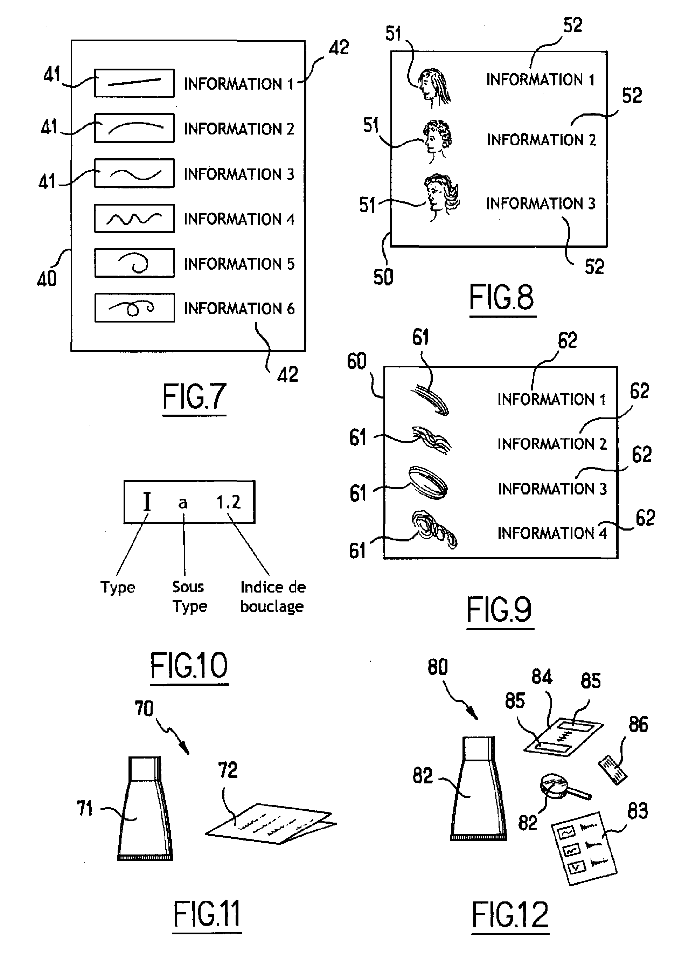

L'invention permet de réaliser des atlas tels que par exemple ceux illustrés aux figures 7 à 9.

L'atlas 40 représenté à la figure 7 comporte plusieurs représentations de cheveux isolés associées à des informations correspondantes 42 renseignant sur au moins un paramètre lié à la forme du cheveu objet de la représentation correspondante, notamment un paramètre mesurable.

L'atlas 40 peut par exemple représenter six représentations de cheveux correspondant aux six types I à VI mentionnés plus haut et les informations 42 comporter respectivement les identifiants I à VI ou les lettres O, S, C, I, éventuellement affectées pour certains des indices 1 ou 2 mentionnés plus haut.

L'atlas 50 représenté à la figure 8 comporte des représentations 51 de chevelures entières ou partielles et des informations 52 correspondantes, renseignant sur au moins un paramètre mesurable lié à la forme d'un cheveu prélevé sur ces chevelures.

L'atlas 60 représenté à la figure 9 comporte par exemple un méchier composé de plusieurs mèches 61 de cheveux et, en correspondance avec chacune de ces mèches, une information 62 renseignant sur au moins un paramètre lié à la forme d'au moins un cheveu extrait de la mèche correspondante.

### Exemples de produits

L'invention peut avantageusement permettre d'associer à au moins une composition capillaire au moins une information représentative d'au moins un paramètre, mesurable ou observable, lié à la forme d'au moins un cheveu.

Par « composition capillaire », il faut entendre toute composition de traitement des cheveux utilisée par le consommateur lui-même ou par des professionnels tels que coiffeurs, dermatologues, esthéticiens. Cette utilisation peut être associée par exemple à une formation reposant sur une classification du cheveu ou utilisant un support d'informations descriptif de cette classification.

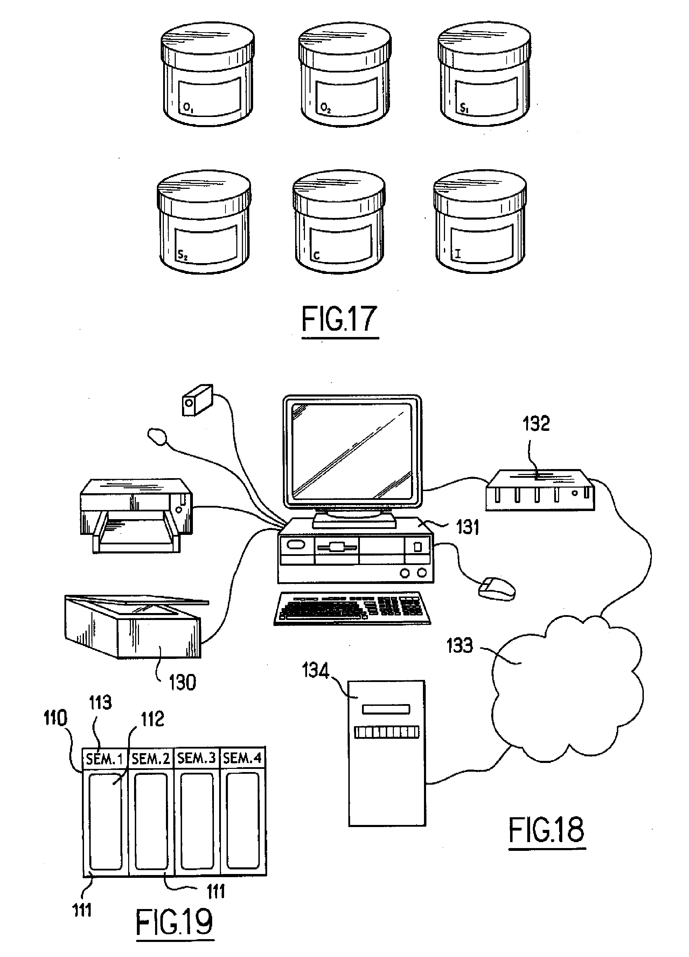

On peut par exemple, comme illustré à la figure 17, réaliser au moins un produit comportant une composition capillaire et un récipient pour la contenir, ce récipient portant au moins un identifiant choisi par exemple parmi ceux mentionnés plus haut et renseignant l'utilisateur par exemple sur le type de chevelure à laquelle le produit est adapté et/ou le type de chevelure pouvant être obtenu après traitement avec la composition.

Dans l'exemple de la figure 17, on a représenté une gamme de produits dans laquelle les produits sont respectivement affectés à des identifiants $O_1$, $O_2$, $S_1$, $S_2$, C et I, afm par exemple d'indiquer au consommateur pour quel type de chevelure chaque produit est adapté ou quel type de résultat il est susceptible d'obtenir avec la composition.

L'invention permet également de réaliser comme illustré à la figure 11 un produit 70 comportant, d'une part un récipient 71 contenant une composition capillaire et, d'autre part, un support d'informations 72 contenant au moins une instruction guidant l'utilisateur sur la manière de déterminer au moins un paramètre mesurable ou observable lié à la forme du cheveu.

19 **EP 1 591 063 A2** 20

Le support d'informations 72 peut par exemple inciter l'utilisateur à se connecter à un site Internet ou un serveur vocal, et comporter une adresse et/ou un numéro de téléphone à cet effet. Le support d'informations 72 peut encore indiquer à l'utilisateur comment calculer un indice de bouclage, déterminer le degré de vrillage ou mesurer le diamètre de courbure d'un cheveu.

Le support d'informations 72 peut par exemple comporter un gabarit 10 tel que celui représenté à la figure 1.

Le support d'informations 72 peut encore comporter un atlas par exemple analogue à l'un de ceux représentés aux figures 7 et 8, pour permettre à l'utilisateur d'évaluer son type de chevelure, et bénéficier ainsi de cette information lors d'un achat ultérieur.

Le support d'informations 72 peut encore comporter par exemple un tableau tel que celui illustré à la figure 16, comportant au moins deux représentations 73 de cheveux ou de chevelures correspondant à deux résultats de traitement au moyen de la composition contenue dans le récipient 71, dépendant par exemple de la quantité de composition utilisée ou de son mode d'application.

Chaque résultat correspondant à une représentation 73 peut par exemple être repéré par un identifiant, par exemple l'un de ceux mentionnés plus haut.

Par exemple, si la composition permet de friser les cheveux, l'un des résultats de traitement peut par exemple être repéré par l'identifiant $O_1$ et l'autre résultat par l'identifiant $O_2$, afin d'indiquer à l'utilisateur que dans un cas on obtiendra des cheveux plus fortement bouclés que dans l'autre.

Le support d'informations 72 peut également comporter des instructions guidant l'utilisateur sur la manière d'acquérir une image de l'un de ses cheveux au moyen par exemple d'une photocopieuse, d'un scanner, d'un appareil photo numérique ou d'une caméra afin de l'adresser à un centre d'analyse délocalisé et de recevoir en retour un conseil, par exemple sur l'utilisation de la composition.

Le produit 80, illustré de manière schématique à la figure 12, comporte au moins un récipient 81 contenant une composition capillaire et au moins un moyen d'analyse d'un paramètre lié à la forme du cheveu.

On n'a représenté à la figure 12 que quelques exemples de moyens d'analyse pouvant être utilisés, parmi d'autres.

Il peut s'agir par exemple d'un dispositif de grossissement optique 82 tel qu'une loupe, d'un atlas 83 par exemple analogue à l'un de ceux représentés aux figures 7 et 8, d'un support 84 permettant de maintenir au moins un cheveu à l'état sensiblement étiré afin de l'observer sous un éclairage rasant et de déterminer son degré de vrillage, ce support 84 comportant par exemple deux bandes adhésives 85 permettant de maintenir les extrémités du cheveu fixement sur celui-ci.

Des moyens d'analyse tels qu'un gabarit ou une règle peuvent encore être utilisés.

Les moyens d'analyse peuvent également comporter, le cas échéant, une composition de nettoyage et/ou de préparation à l'observation, contenue par exemple dans une capsule 86, afm de nettoyer le cheveu ou de lui faire subir un traitement chimique préalablement à son observation.

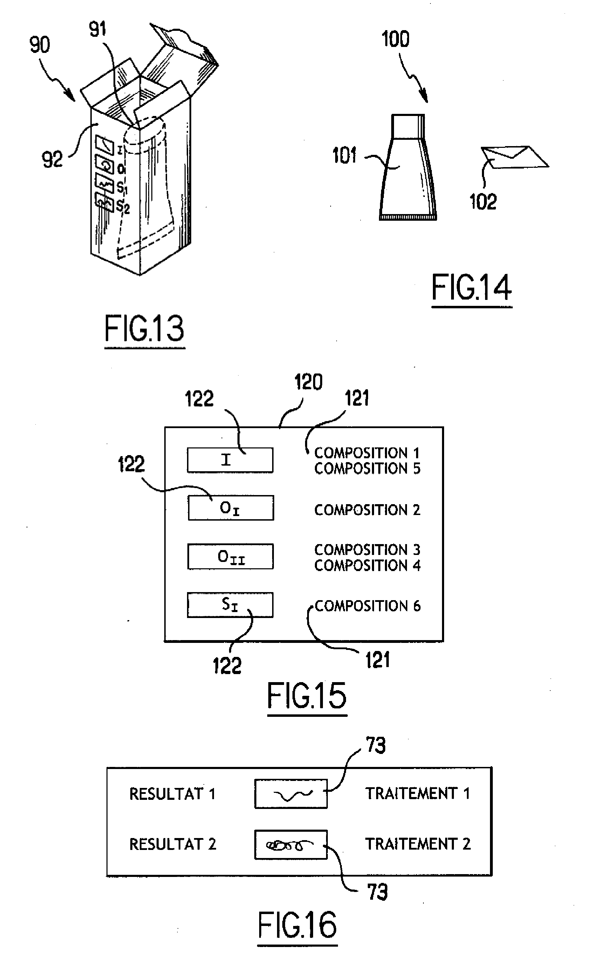

Le produit 90 représenté à la figure 13 comporte par exemple, outre au moins un récipient 91 contenant la composition, un atlas qui peut figurer sur un emballage 92 dans lequel le récipient 91 est contenu.

Cet atlas peut par exemple être analogue à l'un de ceux représentés aux figures 7 et 8 et permettre au consommateur ou au professionnel de déterminer l'identifiant qui correspond à une chevelure avant de procéder à l'achat et/ou à l'application d'une composition capillaire adaptée.

Le produit 100 représenté à la figure 14 comporte au moins un récipient 101 contenant une composition capillaire et un conditionnement 102 permettant à l'utilisateur d'adresser au moins un cheveu prélevé sur sa chevelure à un centre d'analyse délocalisé en vue de recevoir en retour par exemple un conseil sur l'utilisation de la composition capillaire ou une information le renseignant sur au moins un paramètre lié à la forme du cheveu.

Le cas échéant, le conditionnement 102 peut être pré-affranchi.

Le produit peut encore comporter au moins un récipient contenant une composition capillaire et un support 110 tel que celui représenté à la figure 19, permettant de conserver au moins deux cheveux prélevés à des moments différents sur la chevelure de l'utilisateur, en vue par exemple de comparer les effets dans le temps d'un traitement.

Ce support 110 peut par exemple comporter plusieurs régions 111 permettant chacune le positionnement d'une bande adhésive transparente 112 destinée à recouvrir un cheveu après son prélèvement. Chaque région 111 peut par exemple être associée à une information 113 concernant le moment où le prélèvement doit être effectué ou plus simplement rappeler l'ordre dans lequel les prélèvements ont été effectués.

Le cas échéant, des compositions capillaires destinées à exercer une action sur la forme des cheveux peuvent être contenues dans des récipients ne comportant aucune information renseignant l'utilisateur sur un paramètre mesurable lié à la forme du cheveu, mais les marques et/ou références commerciales 121 de ces compositions, lesquelles peuvent être des compositions bien connues le cas échéant, peuvent figurer dans un tableau 120, chacune en correspondance avec une information 122 représentative d'au moins un paramètre mesurable lié à la forme de cheveux pour lequel ces compositions sont adaptées et/ou permettant d'obtenir un résultat prédéfini. L'information 122 est par exemple portée par l'un des identifiants O, S, C, I précités.

On a représenté à la figure 18 un système informatique qui comporte par exemple un scanner 130

**11**

relié à un micro-ordinateur 131 lui-même connecté par un modem 132 à un réseau informatique 133, tel que par exemple le réseau Internet, afin de permettre à un utilisateur d'envoyer à un système informatique 134 au moins une image d'un cheveu. Le système informatique 134 est agencé pour analyser cette image et déterminer par exemple l'un au moins du degré de courbure et du degré de bouclage.

Le système informatique 134 peut délivrer en retour à l'utilisateur une information lui permettant de connaître son type de chevelure et, le cas échéant, un sous-type ou toute autre information représentative d'un paramètre mesurable ou observable lié à la forme du cheveu.

L'utilisateur peut également recevoir un conseil sur l'utilisation d'au moins une composition adaptée à sa chevelure ou une prescription d'une ou de plusieurs compositions adaptées à sa chevelure.

L'utilisateur peut encore, par exemple, interroger le système informatique 134 en lui indiquant le type de chevelure qu'il souhaite obtenir et le système informatique 134 peut délivrer en retour une information concernant la ou les compositions capillaires permettant d'atteindre ce résultat.

L'invention peut faciliter la conception et le choix de produits adaptés à une chevelure donnée.

Bien entendu, l'invention n'est pas limitée aux exemples qui viennent d'être donnés.

Dans toute la description, y compris les revendications, l'expression « comportant un » doit être comprise comme étant synonyme de « comportant au moins un », sauf si le contraire est spécifié.

**Revendications**

1.  Produit comportant :

    i) au moins une composition capillaire, et
    ii) au moins une première information représentative d'au moins un paramètre mesurable lié à la forme d'au moins un cheveu d'une chevelure à laquelle la composition est adaptée et/ou d'une chevelure susceptible d'être obtenue après application de la composition.

2.  Produit selon la revendication 1, **caractérisé par le fait que** la composition capillaire est une composition de permanente, lissage et/ou défrisage des cheveux, ou une composition de mise en forme de la chevelure, notamment un gel de coiffage.

3.  Produit selon la revendication 1 ou 2, **caractérisé par le fait que** la première information est représentative d'au moins deux paramètres mesurables liés à la forme du cheveu.

4.  Produit selon l'une quelconque des revendications 1 à 3, **caractérisé par le fait que** le ou les paramètres mesurables sont choisis parmi :

    a) le degré de courbure d'au moins un cheveu,
    b) le degré de vrillage d'au moins un cheveu,
    c) le degré de bouclage d'au moins un cheveu,
    d) le degré d'ellipticité d'au moins un cheveu, et
    e) l'épaisseur moyenne d'au moins un cheveu.

5.  Produit selon l'une quelconque des revendications précédentes, **caractérisé par le fait qu'**il comporte en outre une seconde information représentative d'au moins un paramètre observable lié à la forme d'au moins un cheveu.

6.  Produit selon la revendication 5, **caractérisé par le fait que** le paramètre observable est choisi parmi :

    a) le caractère bouclé ou non,
    b) le caractère ondulé ou non.

7.  Produit selon l'une quelconque des revendications précédentes, **caractérisé par le fait qu'**il comporte en outre une troisième information représentative d'au moins un paramètre non lié à la forme du cheveu.

8.  Produit selon la revendication 7, **caractérisé par le fait que** le paramètre non lié à la forme du cheveu est représentatif de la couleur et/ou de la brillance du cheveu.

9.  Produit selon l'une quelconque des revendications 1, 5 et 7, **caractérisé par le fait que** l'une au moins des première, deuxième et troisième informations comporte un identifiant.

10. Produit selon la revendication 9, **caractérisé par le fait que** l'identifiant comporte au moins l'un d'un caractère alphanumérique, d'un symbole, d'un dessin, d'une couleur ou d'un code à barres.

11. Produit selon la revendication 10, **caractérisé par le fait que** l'identifiant comporte au moins un caractère alphanumérique dont la forme est représentative de celle du cheveu avant ou après traitement.

12. Produit selon la revendication 11, **caractérisé par le fait que** le caractère alphanumérique est choisi parmi les lettres I, O, S et C.

13. Produit selon la revendication 11 ou 12, **caractérisé par le fait que** l'identifiant comporte en outre un chiffre suivant le caractère alphanumérique.

14. Produit selon la revendication 13, **caractérisé par le fait que** le chiffre est choisi parmi les chiffres arabes, notamment 1 et 2 ou romains, notamment I et II.

**15.** Produit selon l'une quelconque des revendications précédentes, **caractérisé par le fait qu'**il comporte au moins un moyen d'analyse, notamment une règle ou un gabarit, pour mesurer au moins un paramètre lié à la forme du cheveu.

**16.** Produit selon la revendication 15, **caractérisé par le fait que** le moyen d'analyse est inclus dans un emballage avec la composition capillaire.

**17.** Produit selon l'une quelconque des revendications précédentes, **caractérisé par le fait qu'**il comporte au moins une instruction renseignant sur une démarche à effectuer en vue de mesurer au moins un paramètre lié à la forme du cheveu.

**18.** Produit selon l'une quelconque des revendications précédentes, **caractérisé par le fait qu'**il comporte au moins un support (110) permettant de fixer dessus des cheveux prélevés à différents stades d'un traitement au moyen du produit, afin de permettre à l'utilisateur de constater l'effet du traitement.

**19.** Produit selon l'une quelconque des revendications précédentes, **caractérisé par le fait qu'**il comporte au moins un conditionnement (102) pour recevoir un cheveu avant et/ou après traitement par le produit, en vue de son expédition à un centre d'analyse délocalisé.

**20.** Produit selon la revendication 19, **caractérisé par le fait que** le conditionnement est pré-affranchi.

**21.** Produit selon l'une quelconque des revendications précédentes, **caractérisé par le fait qu'**il comporte au moins deux représentations de cheveux et/ou de chevelures et, en correspondance avec ces représentations, au moins deux informations représentatives d'au moins un paramètre lié à la forme du cheveu.

**22.** Produit selon l'une quelconque des revendications précédentes, **caractérisé par le fait qu'**il comporte une adresse électronique d'un site ou un numéro de téléphone d'un serveur où peut être envoyée une image d'au moins un cheveu.

**23.** Produit selon l'une quelconque des revendications précédentes, **caractérisé par le fait qu'**il comporte une composition destinée à nettoyer le cheveu avant mesure et/ou observation d'au moins un paramètre lié à sa forme.

**24.** Gamme de produits comportant au moins des premier et second produits tels que définis dans l'une quelconque des revendications 1 à 23, le premier produit comportant une première information différente de la première information du second produit.

**25.** Produit comportant :

i) au moins une composition capillaire,
ii) au moins un identifiant sous forme d'un caractère alphanumérique ou graphisme ayant une forme représentative de celle d'un cheveu d'une chevelure pour laquelle la composition est adaptée et/ou d'un cheveu d'une chevelure susceptible d'être obtenue après l'application de la composition.

**26.** Produit selon la revendication 25, **caractérisé par le fait que** le caractère alphanumérique est choisi parmi les lettres I, O, S et C.

**27.** Produit selon la revendication 26, **caractérisé par le fait que** l'identifiant comporte en outre un chiffre associé au caractère alphanumérique.

**28.** Produit selon la revendication 27, **caractérisé par le fait que** le chiffre est choisi parmi les chiffres arabes, notamment 1 et 2 ou romains, notamment I et II.

**29.** Produit comportant :

i) au moins une composition capillaire,
ii) au moins un moyen d'analyse pour mesurer au moins un paramètre mesurable lié à la forme d'un cheveu, ce moyen d'analyse étant inclus dans un emballage avec la composition capillaire.

**30.** Produit selon la revendication 29, **caractérisé par le fait que** le moyen d'analyse comporte l'un au moins d'un gabarit, atlas, règle, dispositif de grossissement optique, support capable de maintenir un cheveu pour l'observation, dispositif électro-optique, dispositif d'éclairage, notamment unidirectionnel, support informatique, moyens de fixation adhésifs d'un cheveu.

**31.** Produit (33) comportant :

i) au moins une composition capillaire,
ii) au moins deux représentations de cheveux et/ou de chevelures et, en correspondance avec ces représentations, au moins deux informations représentatives d'au moins un paramètre lié à la forme du cheveu, permettant à un consommateur de déterminer plus facilement son type de cheveux ou d'illustrer un effet exercé par la composition capillaire sur la forme du cheveu.

**32.** Produit comportant :

 i) au moins une composition capillaire,
 ii) au moins un conditionnement (102) pour recevoir un cheveu avant ou après traitement avec la composition.

**33.** Produit selon la revendication 32, **caractérisé par le fait que** le conditionnement est pré-affranchi.

**34.** Système informatique (134) agencé pour :

 - recevoir d'un sujet au moins une image électronique d'au moins un cheveu,
 - analyser l'image de manière à déterminer au moins un paramètre lié à la forme du cheveu,
 - délivrer au sujet au moins une information représentative dudit paramètre.

**35.** Système selon la revendication 34, **caractérisé par le fait qu'**il est agencé pour prescrire au moins une composition capillaire adaptée à la chevelure dont est issu le cheveu.

**36.** Système selon la revendication 35, **caractérisé en ce qu'**il est agencé pour initier l'envoi au sujet de la composition capillaire, notamment *via* une centrale de distribution.

**37.** Atlas (50 ; 60) comportant :

 - au moins deux représentations (51) et/ou échantillons (61) de chevelures,
 - au moins une première information (52 ; 62) associée à chaque représentation et/ou échantillon, représentative d'au moins un paramètre mesurable lié à la forme du cheveu.

**38.** Atlas selon la revendication 37, **caractérisé par le fait que** le paramètre mesurable est choisi parmi :

 a) le degré de courbure d'au moins un cheveu,
 b) le degré de vrillage d'au moins un cheveu,
 c) le degré de bouclage d'au moins un cheveu,
 d) le degré d'ellipticité d'au moins un cheveu, et
 e) l'épaisseur moyenne d'au moins un cheveu.

**39.** Atlas selon la revendication 38, **caractérisé par le fait que** la première information comporte un identifiant.

**40.** Atlas selon la revendication 39, **caractérisé par le fait que** l'identifiant comporte au moins l'un d'un caractère alphanumérique, d'un symbole, d'un dessin, d'une couleur ou d'un code à barres.

**41.** Atlas selon la revendication 40, **caractérisé par le fait que** l'identifiant comporte au moins un caractère alphanumérique dont la forme est représentative de celle du cheveu avant ou après traitement.

**42.** Atlas (40) comportant :

 - au moins deux représentations 2D (41) d'un cheveu,
 - au moins une première information (42) associée à chaque représentation représentative d'au moins un paramètre mesurable lié à la forme du cheveu.

**43.** Procédé pour caractériser une chevelure dans lequel on détermine au moins un paramètre mesurable lié à la forme d'un cheveu.

**44.** Procédé selon la revendication 43, **caractérisé par le fait que** la détermination fait intervenir au moins une mesure choisie parmi : la mesure de la longueur du cheveu au repos et à l'état étiré, la mesure de la courbure du cheveu, de son ellipticité, de son épaisseur moyenne, ou de la fréquence spatiale d'une variation donnée d'aspect du cheveu, notamment d'épaisseur apparente et/ou de courbure locale.

**45.** Procédé selon la revendication 44, **caractérisé par le fait que** la ou les mesures sont effectuées à l'oeil nu, sans dispositif optique grossissant.

**46.** Procédé selon la revendication 43, **caractérisé par le fait que** le paramètre mesurable est choisi parmi :

 a) le degré de courbure d'au moins un cheveu,
 b) le degré de vrillage d'au moins un cheveu,
 c) le degré de bouclage d'au moins un cheveu,
 d) le degré d'ellipticité d'au moins un cheveu, et
 e) l'épaisseur moyenne d'au moins un cheveu.

**47.** Procédé selon la revendication 46, **caractérisé en ce que** l'on mesure un diamètre de courbure du cheveu en utilisant un gabarit (10).

**48.** Procédé selon l'une des revendications 46 et 47, **caractérisé en ce que** le degré de vrillage est déterminé en comptabilisant le nombre de vrilles par unité de longueur du cheveu.

**49.** Procédé selon la revendication 48, **caractérisé en ce que** pour déterminer le nombre de vrilles le cheveu est observé à l'état sensiblement étiré.

**50.** Procédé selon l'une des revendications 48 et 49, **caractérisé en ce que** le cheveu est observé sous un éclairage rasant.

**51.** Procédé selon l'une quelconque des revendications 46 à 50, **caractérisé en ce que** le degré de bouclage est déterminé à partir de la mesure de la longueur maximale ($L_2$) du cheveu et de sa longueur ($L_1$) au repos.

**52.** Procédé selon la revendication 43, **caractérisé en ce qu'**il comporte le prélèvement d'au moins un cheveu, la détermination d'un diamètre de courbure d'au moins une portion de celui-ci, la mesure de sa longueur au repos, la mesure de sa longueur à l'état sensiblement étiré, et son observation de préférence sous éclairage rasant à l'état sensiblement étiré afin de déterminer le nombre de vrilles par unité de longueur.

**53.** Procédé selon l'une quelconque des revendications 43 à 52, **caractérisé en ce qu'**il comporte la détermination du caractère ondulant ou non du cheveu.

**54.** Procédé selon l'une quelconque des revendications 43 à 53, **caractérisé en ce qu'**il comporte la détermination du caractère bouclé ou non du cheveu.

**55.** Procédé selon les revendications 42, 53 et 54, **caractérisé en ce que** l'on attribue au cheveu un identifiant choisi parmi six identifiants, notamment un premier identifiant correspondant à des cheveux dont le rayon de courbure au repos est supérieur ou égal à une première valeur de seuil prédéfinie, notamment 80 cm, un second identifiant correspondant à des cheveux ayant une légère courbure, notamment un diamètre de courbure inférieur à la première valeur de seuil, les cheveux ne présentant pas de caractère ondulant ni de caractère bouclé, un troisième identifiant correspondant à des cheveux dont le diamètre de courbure est par exemple supérieur ou égal à une deuxième valeur de seuil prédéfmie, notamment 5 cm, et présentant un caractère ondulant, un quatrième identifiant correspondant à des cheveux présentant un caractère ondulant et un diamètre de courbure inférieur à la deuxième valeur de seuil, un cinquième identifiant correspondant à des cheveux présentant un caractère bouclé et un diamètre de courbure supérieur ou égal à la deuxième valeur de seuil, et un sixième identifiant correspondant à des cheveux présentant un caractère bouclé et un diamètre de courbure inférieur à la deuxième valeur de seuil.

**56.** Procédé selon la revendication 43, **caractérisé en ce que** le résultat de la caractérisation est répertorié dans une base de données avec au moins une information concernant la personne sur laquelle le cheveu a été prélevé.

**57.** Procédé de fabrication d'un produit tel que défini dans l'une quelconque des revendications 1 à 23, dans lequel on appose sur un conditionnement de la composition un identifiant porteur de ladite information.

**58.** Procédé selon la revendication 57, **caractérisé en ce que** l'identifiant est apposé directement sur un récipient contenant la composition capillaire.

**59.** Procédé selon la revendication 57, **caractérisé en ce que** l'identifiant est apposé sur un emballage contenant un récipient renfermant la composition capillaire.

**60.** Procédé de mise en évidence de l'efficacité d'une composition capillaire, comportant les étapes consistant à :

i) attribuer à une chevelure au moins un paramètre mesurable lié à la forme du cheveu,
ii) effectuer un traitement avec la composition,
iii) renouveler l'étape i) sur la chevelure traitée en ii).

**61.** Dispositif (20) pour caractériser le degré de vrillage d'au moins un cheveu, comportant :

- un support (21) permettant de maintenir le cheveu dans un état sensiblement étiré,
- une source de lumière permettant d'illuminer le cheveu dans une direction (25) sensiblement perpendiculaire à une direction d'observation (O) du cheveu (C).

**62.** Dispositif selon la revendication 61, **caractérisé en ce que** le cheveu est éclairé dans une direction sensiblement parallèle au support (21).

**63.** Dispositif selon l'une des revendications 61 et 62, **caractérisé en ce que** le cheveu est maintenu à l'état sensiblement étiré contre le support (21) au moyen de bandes adhésives.

**64.** Dispositif selon l'une quelconque des revendications 61 à 63, **caractérisé en ce qu'**il comporte une fente (24), orientée de préférence sensiblement parallèlement au cheveu, à travers laquelle la source émet.

**65.** Procédé pour caractériser le degré de vrillage d'au moins un cheveu, comportant :

- l'illumination d'un cheveu (C) maintenu à l'état sensiblement étiré sur toute sa longueur,
- la détermination d'une grandeur représentative d'une variation d'aspect du cheveu sur sa longueur, notamment une variation de son épaisseur apparente et/ou de sa brillance.

**66.** Procédé selon la revendication 65, **caractérisé par**

**le fait que** la grandeur représentative d'une variation d'aspect du cheveu sur sa longueur est une grandeur représentative d'une fréquence spatiale de variation d'aspect du cheveu.

67. Procédé de traitement capillaire, comportant les étapes suivantes :

- associer à un consommateur un identifiant représentatif d'au moins un paramètre mesurable lié à la forme d'au moins l'un de ses cheveux,
- en fonction de cette information, sélectionner au moins un produit capillaire parmi un ensemble de produits repérés par des identifiants correspondants,
- traiter le consommateur avec le ou les produits sélectionnés.

68. Procédé de caractérisation d'au moins un cheveu, dans lequel on détermine le degré de vrillage du cheveu.

69. Dispositif pour caractériser le degré de courbure d'au moins un cheveu, comportant un support d'informations tel qu'un gabarit (10), le support ayant au moins une zone transparente et comportant une pluralité d'arcs de cercle et/ou cercles ayant des diamètres différents, notamment imprimés, dans la zone transparente du support.

70. Dispositif selon la revendication précédente, **caractérisé par le fait que** le support est une feuille transparente.

71. Procédé pour caractériser le degré de courbure d'au moins un cheveu, à l'aide du dispositif selon la revendication 69 ou 70, le procédé comportant les étapes suivantes :

- poser le support sur le cheveu de manière à ce que le cheveu apparaisse à travers la zone transparente du support,
- comparer la courbure du cheveu avec les arcs de cercle et/ou cercles du support en vue de déterminer un degré de courbure du cheveu.

## FIG.1

## FIG.2

FIG.3

FIG.4

FIG.5

FIG.6

18

EP 1 591 063 A2

FIG.7

FIG.8

FIG.9

Type — Sous Type — Indice de bouclage

FIG.10

FIG.11

FIG.12

FIG.13

FIG.14

| | |
|---|---|
| I | COMPOSITION 1<br>COMPOSITION 5 |
| $O_I$ | COMPOSITION 2 |
| $O_{II}$ | COMPOSITION 3<br>COMPOSITION 4 |
| $S_I$ | COMPOSITION 6 |

FIG.15

| RESULTAT 1 | | TRAITEMENT 1 |
|---|---|---|
| RESULTAT 2 | | TRAITEMENT 2 |

FIG.16

FIG.17

FIG.18

FIG.19

80

40

10

20

20,5

15

10,5

5,5    1,5    0,5

10        5        1

0,1 cm        0,2 cm        0,3 cm        0,4 cm

FIG.20